# EUROPÄISCHE PATENTSCHRIFT

(11) **EP 3 552 439 B1**
(45) Veröffentlichungstag und Bekanntmachung des Hinweises auf die Patenterteilung: **02.07.2025**
(21) Anmeldenummer: 17811275.1
(22) Anmeldetag: 05.12.2017
(51) Int. Cl.: H04W 12/08, H04W 52/02

(54) **TELEFONIE-STEUERGERÄT, FORTBEWEGUNGSMITTEL UND VERFAHREN ZUM BETREIBEN EINES MOBILFUNK-MODULS FÜR EIN FORTBEWEGUNGSMITTEL**
TELEPHONY CONTROL DEVICE, MEANS OF LOCOMOTION AND METHOD FOR OPERATING A MOBILE RADIO MODULE FOR A MEANS OF LOCOMOTION
APPAREIL DE COMMANDE DE TÉLÉPHONIE, MOYEN DE LOCOMOTION ET PROCÉDÉ POUR FAIRE FONCTIONNER UN MODULE DE TÉLÉPHONIE MOBILE POUR UN MOYEN DE LOCOMOTION

(30) Priorität: 06.12.2016 DE 102016224256
(43) Veröffentlichungstag der Anmeldung: 16.10.2019
(73) Patentinhaber: Bayerische Motoren Werke Aktiengesellschaft, 80809 München (DE)
(72) Erfinder: KAINDL, Markus, 85579 Neubiberg (DE)
(86) Internationale Anmeldenummer: PCT/EP2017/081441
(87) Internationale Veröffentlichungsnummer: WO 2018/104260

(56) Entgegenhaltungen:
- CA-A1- 2 821 197
- DE-A1- 102004 049 297
- DE-A1- 102010 052 812
- DE-A1- 102013 006 927
- US-A1- 2005 208 933
- US-A1- 2012 162 423
- US-A1- 2015 066 287
- US-A1- 2015 183 386

## Beschreibung

Die vorliegende Erfindung betrifft ein Telefonie-Steuergerät, ein Fortbewegungsmittel sowie ein Verfahren zum Betreiben eines Mobilfunk-Moduls eines Telefonie-Steuergerätes für ein Fortbewegungsmittel. Insbesondere betrifft die vorliegende Erfindung eine Verhinderung unautorisierter Zugriffe auf das Daten-Bordnetz des Fortbewegungsmittels.

Datentechnisch vernetzte Fahrzeuge weisen ein Telematiksteuergerät mit einem Mobilfunk-Modul auf. Über das Mobilfunk-Modul können Datenkommunikationsverbindungen für unterschiedlichste Zwecke unterhalten werden. Beispielsweise kann die Software von Steuergeräten, ihre Bedatung ("Codierung") und ihre Firmware über Drahtloskommunikationsverbindungen aktualisiert und modifiziert werden. Für die Vertragslaufzeit von Telekommunikationsdiensten, welche mit einem Fortbewegungsmittel verknüpft sind, existiert üblicherweise ein Mobilfunkvertrag. Zur Schließung von Sicherheitslücken oder Funktionsaktualisierungen existieren Verfahren zum Aktualisieren der Steuergeräte-Software über die Mobilfunk-Datenschnittstelle mit einem Mobilfunknetz.

Die Software des Telematiksteuergerätes/der Modemfirmware des Mobilfunk-Moduls muss kontinuierlich auf bekannt gewordene Sicherheitslücken überprüft werden. Diese Sicherheitslücken können über Hotfixes "Over the Air" in das Telematiksteuergerät/Mobilfunkmodem geschlossen werden. Die Pflege muss über den gesamten Lebenszyklus des Fahrzeugs erfolgen, um die Sicherheit des Fahrzeugs gegen Angriffe von außen (z. B. aus dem Internet) zu gewährleisten. Es ist nicht sichergestellt, dass diese Anforderung über den gesamten

Lebenszyklus des Fahrzeugs ermöglicht werden kann (z. B. reicht die Leistungsfähigkeit der verbauten Hardware für Softwareupdates/neue Sicherheits-Fixes (auch "Security-Algorithmen") nicht aus, Sublieferanten stellen Support für die verbauten Komponenten ein o. ä.). Ein Beenden der Dienste und Deaktivieren der SIM-Karte reicht nicht aus. Das Mobilfunkmodem versucht auch anschließend noch, sich in das Mobilfunknetz einzubuchen und ist somit weiter anfällig für unautorisierte Datenverbindungen (auch "Man-in-the-Middle"-Angriffe) mit mobilen Basisstationen. Zusammengefasst besteht ein Sicherheitsrisiko für die Dateninfrastruktur des Fortbewegungsmittels für den Fall nicht ordnungsgemäß gewarteter Sicherheitsvorkehrungen.

DE 10 2013 006 927 A1 offenbart ein Kommunikationssystem und ein Verfahren zur Aktivierung eines Kommunikationskanals zu einem Fortbewegungsmittel. Wird beispielsweise mit einem Funkschlüssel ein Zugriff auf ein Fortbewegungsmittel festgestellt, kann ein WLAN-Modul aufgeweckt werden, um möglichst kurzfristig für eine Datenkommunikation zur Verfügung zu stehen. Nach erfolgter Übertragung wird positionsabhängig eine vordefinierte Zeit abgewartet, bis der zur WLAN-Übertragung aufgebaute Kommunikationskanal deaktiviert wird.

US 2015/0066287 A1 offenbart ein Verfahren zum Resetting eines Telefonie-Steuergerätes eines Fortbewegungsmittels. Im Ansprechen auf einen nichtdefinierten Code wird das deaktivierte Steuergerät durch einen Resettrigger reaktiviert.

US 2005/0208933 A1 offenbart ein Dual-Sim-Kommunikationsendgerät, welches zur Freigabe eines verknüpften Drahtlos-Kommunikationsendgerätes über eine Drahtlos-Nachricht vorübergehend abgeschaltet werden kann.

US 2015/0183386 A1 lehrt eine drahtlos ansteuerbare Sicherung zum Einsatz in elektrischen Systemen von Fahrzeugen. Die Sicherung weist einen Empfänger auf und kann somit aus der Ferne unterbrochen werden.

Es ist eine Aufgabe der vorliegenden Erfindung, den vorstehend identifizierten Bedarf an Datensicherheit zu stillen.

Die vorstehend identifizierte Aufgabe wird erfindungsgemäß durch ein Verfahren zum Betreiben eines Mobilfunk-Moduls eines Telefonie-Steuergerätes für ein Fortbewegungsmittel bzw. zum Schützen derselben gegen eine unautorisierte Datenverbindung gelöst. Das Telefonie-Steuergerät kann auch als Datenkommunikations-Steuergerät oder Datenkommunikations-Gateway verstanden werden. Es ist somit imstande, mindestens das Mobilfunk-Modul zu betreiben bzw. selbiges zu umfassen. Weiterhin kann das Telefonie-Steuergerät einen Applikationsprozessor (z.B. für eine Notruf-Funktion) und ein Modul für eine satellitenbasierte Ortung umfassen. Das Mobilfunk-Modul ist eingerichtet, eine Drahtloskommunikationsverbindung für den Datenaustausch zwischen dem Fortbewegungsmittel und einer Telekommunikations-Infrastruktur (z. B. terrestrisches Mobilfunknetz, WLAN-Access-Point o. ä.) zu unterhalten. Über das Mobilfunk-Modul bzw. das Telefonie-Steuergerät ist das Fortbewegungsmittel eingerichtet, die Datenkommunikation beispielsweise für Aktualisierungen von Steuergeräten (z. B. Navigationssystem, Zugangsberechtigungsprüfsysteme, etc.) abzuwickeln. Das Fortbewegungsmittel selbst kann beispielsweise als Pkw, Transporter, LKW, Motorrad, Luft- und/oder Wasserfahrzeug ausgestaltet sein. In einem ersten Schritt wird ein vordefinierter Deaktivierungsbefehl über eine Drahtlosschnittstelle mittels des Telefonie-Steuergerätes empfangen. Der Deaktivierungsbefehl kann beispielsweise zum Ende eines Zeitraumes, innerhalb dessen Sicherheits-Updates für das Mobilfunk-Modul bereitgestellt werden, gesendet werden. Er kann beispielsweise vom Betreiber und/oder Hersteller des Fortbewegungsmittels veranlasst werden. Insbesondere kann der Hersteller des Mobilfunk-Moduls und/oder des Telefonie-Steuergerätes bekanntgeben, dass die Pflege im Sinne sicherheitsrelevanter Aktualisierungsmaßnahmen aufgegeben wird. Insbesondere ist der Deaktivierungsbefehl nicht lediglich als "Strom aus"-Ereignis zu verstehen, sondern löst eine vordefinierte Routine aus. Um einen autorisierten Zugriff auf die Dateninfrastruktur des Fortbewegungsmittels trotz der nach wie vor funktionstüchtigen Kommunikationshardware zu verhindern, kann im Ansprechen auf das Empfangen des Deaktivierungsbefehls das Mobilfunk-Modul deaktiviert werden. Hierbei kann das Mobilfunk-Modul im Wesentlichen endgültig außer Betrieb genommen werden. Mit anderen Worten wird Sorge dafür getragen, dass die Möglichkeit eines unautorisierten Datenzugriffs nicht mehr besteht. Insbesondere kann dies auch einen Schritt umfassen, mittels dessen unter Modifikation von Hardware und/oder Software fortan verhindert wird, dass eine Datenkommunikationsverbindung mittels des Mobilfunk-Moduls in beide Richtungen ("Uplink" bzw. "Downlink") möglich ist. Im Ergebnis sind Aktualisierungen der Sicherheitssoftware des Fortbewegungsmittels weitgehend erübrigt, da eine drahtlose Datenverbindung unautorisierter Personen/Instanzen nicht mehr aufgebaut werden kann. Im Ergebnis kann das Fortbewegungsmittel auch nach einem Zeitraum regelmäßig aktualisierter Sicherheitsupdates fortwährend sicher betrieben werden.

Die Unteransprüche zeigen bevorzugte Weiterbildungen der Erfindung.

Um zu vermeiden, dass der Deaktivierungsbefehl von einer unautorisierten Person (z. B. mit Schädigungsabsicht) oder versehentlich erzeugt und vom Fortbewegungsmittel empfangen wird, kann das Deaktivieren des Mobilfunk-Moduls einen erfolgreichen Abgleich zwischen dem empfangenen Deaktivierungsbefehl und einer im Fortbewegungsmittel vorgehaltenen vordefinierten Referenz erfolgen. Hierbei ist zu prüfen, dass der Absender des Deaktivierungsbefehls vertrauenswürdig und dem Fahrzeug (individuell) als Empfänger des Deaktivierungsbefehls ausgewählt/bezeichnet ist. Die vordefinierte Referenz kann auch über eine drahtgebundene und/oder drahtlose Datenkommunikationsverbindung empfangen werden und im Fortbewegungsmittel mit dem Deaktivierungsbefehl verglichen werden. Für den Fachmann ist selbstverständlich, dass der Deaktivierungsbefehl in einem Datenpaket enthalten sein kann, dessen Integrität anderweitig mit der vordefinierten Referenz überprüft werden kann, um sicherzustellen, dass der Deaktivierungsbefehl tatsächlich für das vorliegende Fortbewegungsmittel vorgesehen ist.

Das Deaktivieren des Mobilfunk-Moduls kann erfindungsgemäß eine dauerhafte Unterbrechung einer Versorgung des Mobilfunk-Moduls mit elektrischer Energie umfassen. Hierdurch ist dauerhaft und zuverlässig eine (unautorisierte) Verwendung des Mobilfunk-Moduls unterbunden.

In entsprechender Weise kann erfindungsgemäß zusätzlich oder alternativ im Ansprechen auf den Deaktivierungsbefehl eine dauerhafte Unterbrechung einer Versorgung des Telefonie-Steuergerätes mit elektrischer Energie erfolgen, welches seinerseits das Mobilfunk-Modul mit elektrischer Energie versorgt. Im Ergebnis ist auch in dieser erfindungsgemäßen Alternative das Mobilfunk-Modul außer Betrieb genommen und gegen unautorisierte Verwendung gesichert.

Die Drahtlosschnittstelle kann beispielsweise eingerichtet sein, eine terrestrische mobile Datenkommunikationsverbindung mit einem zellenbasierten, terrestrischen oder satellitenbasierten Funknetzwerk/Drahtlosdatenkommunikationssystem zu unterhalten. In bestimmten Fällen kann es erforderlich sein, die Funktion des Telefonie-Steuergerätes und/oder des Mobilfunk-Moduls wiederherzustellen. Beispielsweise kann unerwarteterweise eine Sicherheitsaktualisierung verfügbar werden oder durch andere Maßnahmen ein sicherer Betrieb des Telefonie-Steuergerätes/des Mobilfunk-Moduls sichergestellt sein. Zudem kann es möglich sein, dass der Deaktivierungsbefehl trotz aller Vorsichtsmaßnahmen unbeabsichtigt gegeben worden ist bzw. andere Umstände dazu beitragen, dass die Deaktivierung des Mobilfunk-Moduls rückgängig gemacht werden soll. Hierzu kann in einem nicht der vorliegenden Erfindung entsprechenden Ausführungsbeispiel ein vordefinierter Reaktivierungsbefehl vom Fortbewegungsmittel bzw. vom Telefonie-Steuergerät und/oder vom Mobilfunk-Modul empfangen werden. Dies kann beispielsweise über eine Diagnosebuchse (z. B. OBD, OBD 2, o. ä.) erfolgen. Insbesondere kann also eine drahtgebundene Verbindung Voraussetzung dafür sein, den Reaktivierungsbefehl zu geben, zu empfangen und zur Reaktivierung des Mobilfunk-Moduls zu verwenden. Im Ansprechen auf den Empfang des vordefinierten Reaktivierungsbefehls kann das Mobilfunk-Modul reaktiviert werden. Im Anschluss hieran kann die Software/Bedatung des Mobilfunk-Moduls aktualisiert und der Betrieb des Mobilfunk-Moduls wie vor der Deaktivierung sicher fortgesetzt werden.

Auch das Reaktivieren kann in einem nicht der vorliegenden Erfindung entsprechenden Ausführungsbeispiel im Ansprechen auf einen positiven Abgleich des vordefinierten Reaktivierungsbefehls mit einer vordefinierten Referenz erfolgen. Dies kann im Wesentlichen entsprechend der oben in Verbindung mit dem Deaktivierungsbefehl beschriebenen vordefinierten Referenz erfolgen.

Die Deaktivierung des Mobilfunk-Moduls kann beispielsweise durch das Ansprechen einer Schmelzsicherung erfolgen, welche Bestandteil einer DatenVerbindung zwischen dem Mobilfunk-Modul und seiner Peripherie ist. Mit anderen Worten kann die Schmelzsicherung mit einem derartigen elektrischen Signal beaufschlagt werden, welches die Schmelzsicherung schmelzen lässt. Auf diese Weise ist eine galvanische Verbindung des Mobilfunk-Moduls und/oder des Telefonie-Steuergerätes dauerhaft und insbesondere irreversibel zerstört. Zum Ansprechen der Schmelzsicherung kann selbige beispielsweise über einen Schalter/Transistor mit einer Spannung beaufschlagt werden, welche jenseits eines Ansprechstroms liegende Stromstärken durch die Schmelzsicherung zur Folge hat.

Gemäß einem zweiten Aspekt der vorliegenden Erfindung wird ein Telefonie-Steuergerät für ein Fortbewegungsmittel vorgeschlagen, welches ein Mobilfunk-Modul und einen Dateneingang umfasst. Der Dateneingang ist eingerichtet, einen vordefinierten Befehl über eine Drahtloskommunikationsschnittstelle zu empfangen. Der vordefinierte Befehl kann als Deaktivierungsbefehl ausgestaltet sein, im Ansprechen auf dessen Empfang des Telefonie-Steuergerät eingerichtet ist, das Mobilfunk-Modul zu deaktivieren. Der Deaktivierungsbefehl ist insbesondere nicht als ein solcher Befehl zu verstehen, welcher am Ende eines jeden Betriebszyklus (z. B. nach einem Abziehen eines Zündschlüssels bzw. Parken des Fortbewegungsmittels) gegeben wird, sondern im Wesentlichen einmalig am Ende eines Lebenszeitraums des Mobilfunk-Moduls empfangen und zu dessen Deaktivierung verwendet wird. Auf diese Weise ist das erfindungsgemäße Telefonie-Steuergerät eingerichtet, ein Verfahren gemäß dem erstgenannten Erfindungsaspekt auszuführen. Bezüglich der Merkmale, Merkmalskombinationen und der sich aus diesen ergebenden Vorteile wird daher zur Vermeidung von Wiederholungen auf die obigen Ausführungen verwiesen.

Gemäß einem dritten Aspekt der vorliegenden Erfindung wird ein Fortbewegungsmittel vorgeschlagen, welches beispielsweise als Pkw, Transporter, LKW, Motorrad, Luft- und/oder Wasserfahrzeug ausgestaltet sein kann. Das Fortbewegungsmittel umfasst zumindest ein Telefonie-Steuergerät gemäß dem zweitgenannten Erfindungsaspekt. Auf diese Weise ist auch das erfindungsgemäße Fortbewegungsmittel eingerichtet, die Merkmale, Merkmalskombinationen und Vorteile der vorgenannten Erfindungsaspekte in entsprechender Weise zu verwirklichen, weshalb zur Vermeidung von Wiederholungen auf die obigen Ausführungen verwiesen wird.

Zusätzlich können die von der vorliegenden Erfindung verfolgten Vorteile auch wie folgt erzielt werden: Nach Beendigung des Dienste Angebotes wird ein finaler Shutdown-Befehl vom Backend eines Betreibers und/oder Herstellers des Fortbewegungsmittels an das Fortbewegungsmittel gesendet. Der Empfang führt dazu, dass die Spannungsversorgung des Mobilfunk-Moduls dauerhaft ausgeschaltet wird. Dadurch kann das Mobilfunk-Modul keinen Versuch mehr unternehmen, sich in das Mobilfunknetz einzubuchen. Beispielsweise kann eine Wieder-Inbetriebnahme des Mobilfunk-Moduls durch ein geschütztes Diagnosekommando erfolgen. Dieses kann beispielsweise durch eine Signatur geschützt sein. Insbesondere kann in einem nicht der vorliegenden Erfindung entsprechenden Ausführungsbeispiel das Diagnosekommando über eine Diagnoseschnittstelle zur Reaktivierung des Mobilfunk-Moduls in das Fortbewegungsmittel gelangen. Dies kann beispielsweise über eine drahtgebundene Datenverbindung in einer Handelsorganisation/Niederlassung des Fortbewegungsmittelherstellers erfolgen. Beispielsweise kann ein irrtümlicherweise gesendeter Deaktivierungsbefehl/Shutdown-Befehl eine Reaktivierung des Mobilfunk-Moduls erforderlich machen.

Die Sicherheit des Fahrzeugs gegen Hackerangriffe von außen (also über eine Mobilfunkschnittstelle) ist somit auch nach Beendigung der CD-Dienste und dem Ende des Produktsupports durch Sicherheits-"Hotfixes" gewährleistet.

Weitere Einzelheiten, Merkmale und Vorteile der Erfindung ergeben sich aus der nachfolgenden Beschreibung und den Figuren. Es zeigen:
- Figur 1: eine schematische Darstellung einer Interaktion eines Ausführungsbeispiels eines erfindungsgemäßen Fortbewegungsmittels mit einem Ausführungsbeispiel eines erfindungsgemäßen Telefonie-Steuergerätes mit einer Drahtlosinfrastruktur; und
- Figur 2: ein Flussdiagramm veranschaulichend Schritte eines Ausführungsbeispiels eines erfindungsgemäßen Verfahrens zum Betreiben eines Mobilfunk-Moduls.

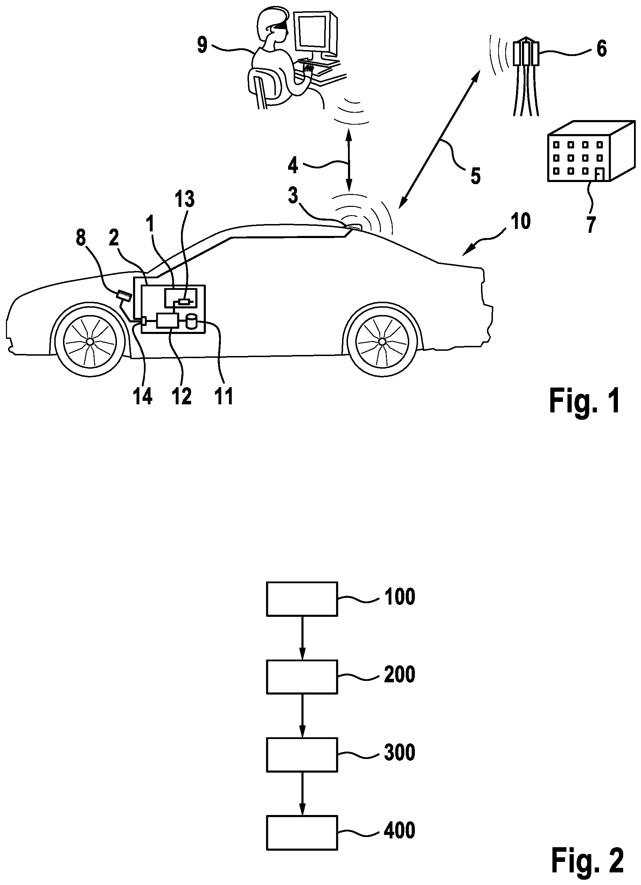

Figur 1 zeigt einen Pkw 10 als Ausführungsbeispiel eines erfindungsgemäßen Fortbewegungsmittels mit einem Telefonie-Steuergerät 2, welches einen Dateneingang 14, eine Auswerteeinheit 12, einen Datenspeicher 11 und ein Mobilfunk-Modul 1 umfasst. Der Dateneingang 14 ist eingerichtet, von einer Antenne 3 empfangene Drahtloskommunikationssignale sowie von einer OBD-Buchse 8 entgegengenommene Diagnosebefehle zu empfangen. Die Auswerteeinheit 12 ist eingerichtet, die Schritte eines erfindungsgemäßen Verfahrens zur Deaktivierung des Mobilfunk-Moduls 1 auszuführen. Hierzu sind entsprechende Schritte in Datenform sowie vordefinierte Referenzen zur Identifizierung von Deaktivierungsbefehlen und Reaktivierungsbefehlen im Datenspeicher 11 abgelegt. Innerhalb des Mobilfunk-Moduls 1 ist eine Schmelzsicherung 13 zur Absicherung einer Stromversorgung des Mobilfunk-Moduls 1 vorgesehen. Die Auswerteeinheit 12 ist eingerichtet, die Schmelzsicherung 13 anzusprechen, sobald ein positiv überprüfter Deaktivierungsbefehl vom Hersteller 7 des Pkw 10 mittels eines Sendemasten 6 über eine autorisierte Drahtloskommunikationsverbindung 5 empfangen wird. Hierdurch wird das Mobilfunk-Modul 1 außer Betrieb genommen. Ein Hacker 9 ist somit nicht mehr imstande, eine unautorisierte Drahtloskommunikationsverbindung 4 mit dem Pkw 10 aufzubauen. Für den Fall, dass der Deaktivierungsbefehl irrtümlicherweise an den Pkw 10 gesendet worden ist, kann der Hersteller 7 des Pkws 10 in einem nicht der vorliegenden Erfindung entsprechenden Ausführungsbeispiel mittels eines Diagnosebefehls eine autorisierte drahtgebundene Kommunikationsverbindung zum Pkw 10 aufbauen, um dem Telefonie-Steuergerät 2 einen Reaktivierungsbefehl zukommen zu lassen. Im Ansprechen auf einen positiven Abgleich des Reaktivierungsbefehls mit einem im Datenspeicher 11 hinterlegten Referenzwert nimmt das Telefonie-Steuergerät 2 mittels der Auswerteeinheit 12 das Mobilfunk-Modul 1 wieder in Betrieb, indem es eine Alternative (nicht dargestellte) Stromversorgung für das Mobilfunk-Modul 1 bereitstellt. Alternativ oder zusätzlich kann der Hersteller 7 des Pkws 10 über die autorisierte Drahtloskommunikationsverbindung 5 dem Anwender des Pkws 10 eine Nachricht zukommen lassen, dass zur Reaktivierung des Mobilfunk-Moduls 1 der Besuch einer Niederlassung erforderlich ist, um unter Verwendung der OBD-Buchse 8 eine drahtgebundene Datenverbindung aufzubauen und den Reaktivierungsbefehl zur Wiederinbetriebnahme des Mobilfunk-Moduls 1 zu geben.

Figur 2 zeigt Schritte eines Ausführungsbeispiels eines erfindungsgemäßen Verfahrens zum Schützen eines Mobilfunk-Moduls eines Telefonie-Steuergerätes eines Fortbewegungsmittels gegen eine unautorisierte Datenverbindung. In Schritt 100 wird ein vordefinierter Deaktivierungsbefehl über eine Drahtlosschnittstelle mittels des Telefonie-Steuergerätes empfangen. Im Ansprechen darauf wird das Mobilfunk-Modul in Schritt 200 permanent deaktiviert. In einem nicht von der vorliegenden Erfindung umfassten Schritt 300 wird ein vordefinierter Reaktivierungsbefehl über eine Diagnosebuchse empfangen. Dieser hat den Hintergrund, dass der zuvor empfangene Deaktivierungsbefehl nicht für das Fortbewegungsmittel bestimmt war. In einem nicht von der vorliegenden Erfindung umfassten Schritt 400 wird schließlich das Mobilfunk-Modul permanent reaktiviert, der zuvor empfangene Deaktivierungsbefehl somit im Wesentlichen ungeschehen gemacht.

### Bezugszeichenliste:

- 1: Mobilfunk-Modul
- 2: Telefonie-Steuergerät
- 3: Antenne
- 4: Unautorisierte Drahtloskommunikationsverbindung
- 5: Autorisierte Drahtloskommunikationsverbindung
- 6: Sendemast
- 7: Fahrzeughersteller
- 8: OBD-Buchse
- 9: Hacker
- 10: Pkw
- 11: Datenspeicher
- 12: Auswerteeinheit
- 13: Schmelzsicherung
- 14: Dateneingang
- 100 bis 400: Verfahrensschritte

## Patentansprüche

1. Verfahren zum Betreiben eines Mobilfunk-Moduls (1) eines Telefonie-Steuergerätes (2) für ein Fortbewegungsmittel (10) umfassend die Schritte:
- Empfangen (100) eines vordefinierten Deaktivierungsbefehls über eine Drahtlosschnittstelle (3) mittels des Telefonie-Steuergerätes (2) und im Ansprechen darauf
- Deaktivieren (200) des Mobilfunk-Moduls (1),
**dadurch gekennzeichnet, dass** das Deaktivieren eine dauerhafte Unterbrechung einer Versorgung des Mobilfunk-Moduls (1) und/oder des Telefonie-Steuergeräts (2) mit elektrischer Energie umfasst und/oder eine Sende-/Empfangseinheit des Mobilfunkmoduls (1) dauerhaft stilllegt.

2. Verfahren nach Anspruch 1, wobei das Deaktivieren im Ansprechen auf einen positiven Abgleich des vordefinierten Deaktivierungsbefehls mit einer vordefinierten Referenz erfolgt.

3. Verfahren nach einem der vorstehenden Ansprüche, wobei die Drahtlosschnittstelle (3) eine terrestrische mobile Datenkommunikationsverbindung verwendet.

4. Verfahren nach einem der vorstehenden Ansprüche weiter umfassend
- Ansprechen einer Schmelzsicherung (13) im Ansprechen auf das Empfangen des vordefinierten Deaktivierungsbefehls.

5. Telefonie-Steuergerät (2) für ein Fortbewegungsmittel (10) umfassend
- ein Mobilfunk-Modul (1) und
- einen Dateneingang (14):
- wobei der Dateneingang (14) eingerichtet ist, einen vordefinierten Deaktivierungsbefehl über eine Drahtlosschnittstelle (3) zu empfangen und
- das Telefonie-Steuergerät (2) eingerichtet ist, im Ansprechen auf den Empfang des Deaktivierungsbefehls das Mobilfunk-Modul (1) zu deaktivieren,
**dadurch gekennzeichnet, dass** das Deaktivieren eine dauerhafte Unterbrechung einer Versorgung des Mobilfunk-Moduls (1) und/oder des Telefonie-Steuergeräts (2) mit elektrischer Energie umfasst und/oder eine Sende-/Empfangseinheit des Mobilfunkmoduls (1) dauerhaft stilllegt.

6. Fortbewegungsmittel (10) umfassend ein Telefonie-Steuergerät (2) nach Anspruch 5.

## Claims

1. Method for operating a mobile radio module (1) of a telephony controller (2) for a means of transport (10), comprising the steps:
- receiving (100) a predefined deactivation command by way of the telephony controller (2) via a wireless interface (3) and, in response thereto,
- deactivating (200) the mobile radio module (1), **characterized in that** the deactivation comprises permanently interrupting a supply of electric power to the mobile radio module (1) and/or the telephony controller (2) and/or permanently shutting down a transceiver unit of the mobile radio module (1).

2. Method according to Claim 1, wherein the deactivation takes place in response to a positive comparison of the predefined deactivation command with a predefined reference.

3. Method according to either of the preceding claims, wherein the wireless interface (3) uses a terrestrial mobile data communication connection.

4. Method according to one of the preceding claims, further comprising
- addressing a fuse (13) in response to the reception of the predefined deactivation command.

5. Telephony controller (2) for a means of transport (10), comprising
- a mobile radio module (1) and
- a data input (14):
- wherein the data input (14) is configured so as to receive a predefined deactivation command via a wireless interface (3) and
- the telephony controller (2) is configured so as to deactivate the mobile radio module (1) in response to the reception of the deactivation command,
**characterized in that** the deactivation comprises permanently interrupting a supply of electric power to the mobile radio module (1) and/or the telephony controller (2) and/or permanently shutting down a transceiver unit of the mobile radio module (1).

6. Means of transport (10) comprising a telephony controller (2) according to Claim 5.

## Revendications

1. Procédé pour faire fonctionner un module (1) de radiocommunication mobile d'un appareil (2) de commande de téléphonie pour un moyen de locomotion (10), comprenant les étapes suivantes :
- réception (100) d'une commande de désactivation prédéfinie via une interface sans fil (3) au moyen de l'appareil (2) de commande de téléphonie et, en réponse à celle-ci
- désactivation (200) du module (1) de radiocommunication mobile,
**caractérisé en ce que** la désactivation comprend une interruption permanente d'une alimentation en énergie électrique du module (1) de radiocommunication mobile et/ou de l'appareil (2) de commande de téléphonie et/ou immobilise de manière permanente une unité d'émission/réception du module (1) de radiocommunication mobile.

2. Procédé selon la revendication 1, dans lequel la désactivation est effectuée en réponse à une comparaison positive de la commande de désactivation prédéfinie avec une référence prédéfinie.

3. Procédé selon l'une des revendications précédentes, dans lequel l'interface sans fil (3) utilise une liaison de communication de données mobile terrestre.

4. Procédé selon l'une des revendications précédentes comprenant en outre
- le fait de répondre à un fusible (13) en réponse à la réception de la commande de désactivation prédéfinie.

5. Appareil (2) de commande de téléphonie pour un moyen de locomotion (10) comprenant
- un module (1) de radiocommunication mobile, et
- une entrée de données (14) :
- l'entrée de données (14) étant conçue de façon à recevoir une commande de désactivation prédéfinie via une interface sans fil (3), et
- l'appareil (2) de commande de téléphonie est agencé de façon à désactiver le module (1) de radiocommunication mobile en réponse à la réception de la commande de désactivation,
**caractérisé en ce que** la désactivation comprend une interruption permanente d'une alimentation en énergie électrique du module (1) de radiocommunication mobile et/ou de l'appareil (2) de commande de téléphonie et/ou immobilise de manière permanente une unité d'émission/réception du module (1) de radiocommunication mobile.

6. Moyen de locomotion (10) comprenant un appareil (2) de commande de téléphonie selon la revendication 5.
